# EUROPEAN PATENT SPECIFICATION

(11) **EP 1 322 077 B1**
(45) Date of publication and mention of the grant of the patent: **03.08.2005**
(21) Application number: 02102785.9
(22) Date of filing: 17.12.2002
(51) Int. Cl.: H04L 12/56

(54) **Method for controlling transmission of high-speed data traffic in IPDLs**
Verfahren zur Steuerung der Übertragung von Hochgeschwindigkeitsdatenverkehr in IPDLs
Procédé de contrôle de la transmission du trafic de données à grande vitesse

(30) Priority: 20.12.2001 CN 01144553
(43) Date of publication of application: 25.06.2003
(73) Proprietor: Huawei Technologies Co., Ltd., Guangdong 518057 (CN)
(72) Inventor: Su, Ning, 518057 Shenzhen City, Guangdong Prov. (CN)
(74) Representative: Camus, Olivier Jean-Claude

(56) References cited:
- WO-A-01/24566
- US-A- 5 479 410

## Description

### BACKGROUND OF THE INVENTION

### 1. Field of the Invention

The present invention relates to a method for high-speed data transmission in wireless communication systems, particularly to a method for controlling transmission of high-speed data traffic in IPDLs.

### 2. Background of the Invention

In a Wideband Code Multiple Address (WCDMA) system, there is a plurality of approaches available to locate mobile stations, and one of them is achieved in a way that a mobile station measures time differences when signal arrives from different base stations. In order to facilitate a mobile station to measure the time when signal arrives from other base stations and avoid any interference of nearby service base station to the mobile station, and enhance the receiving sensitivity of signal from remote base stations, the base station in the cell where the mobile station is should be closed temporarily to decrease the interference. The time of closing downlink transmitting, i.e., IPDL, usually is half of a time slot, and an IPDL usually occurs every 100ms. The mobile station measures the time when signal arrives from other base stations through IPDL so that the mobile station can locates itself.

However, idles in downlinks are implemented at the cost of system performance. During IPDLs, the base station closes signal transmitting downlink, thus all mobile stations in the coverage of the base station cannot receive signal in half of a time slot every 100ms, and it means all the mobile stations lose information in half of a time slot. For fault tolerant and low speed traffic (e.g., voice), such deep-attenuation-like transitory losses can be compensated with TTI error correction codes due to the long transmission time interval (TTI). However, for high-speed data traffic (e.g., 10Mbps), data loss in half time slot will reach 3333 bits. Furthermore, such data loss can't be compensated merely with error correction codes because TTIs for high-speed data traffic may be as short as a time slot. At the same time, packet switched data requires zero error data transmission, and data unable to be corrected will be retransmitted, therefore IPDL will decrease the utilization coefficient of channels. Document WO 01/24566 discloses a method for compressed mode communications over a radio interface wherein radio frames on an uplink/downlink data channel are formed and transmitted to include at least one transmission gap.

### SUMMARY OF THE INVENTION

The object of the present invention is to provide a method for controlling transmission of high-speed data traffic in IPDLs to decrease the effect of IPDL to data traffic and system capacity, and to reduce delay in receiving data, and to improve the utilization coefficient of channels.

To attain above object, the present invention provides a method for controlling transmission of high-speed data traffic in IPDLs, comprising:
(1) the network obtains the occurrence time of an IPDL, and determines the occurrence time of an IPDL, if the time happens in Dedicated Physical Control Channel (DPCH), turn to step (2), if the time happens in High Speed Downlink Shared Channel (HS-DSCH), turn to step (5);
(2) determine whether the IPDL spans two time slots in DPCH. If not, turn to step (3), otherwise turn to step (4);
(3) the spread spectrum factor is halved for signal in the time slot occupied by IPDL and the transmitting power is increased, then turn to step (8);
(4) half the spread spectrum factor of the previous time slot spanned by IPDL, the processed time slot is in the first half time slot, half the spread spectrum factor of the next time slot spanned by IPDL, the processed time slot is in the second half time slot, increase the transmitting power for the signal in the first half of the previous time slot and the signal in the second half of the next time slot, and then turn to step (8);
(5) determine whether the IPDL spans two time slots of HS-DSCH, if not, turn to step (6), otherwise turn to step (7);
(6) insert an integral empty time slot in the position where the IPDL is, and then turn to step (8);
(7) split the previous time slot and the next time slot spanned by IPDL into two halves of a time slot respectively, signal in the first half of the previous time slot is transmitted normally, while signal in the second half of the previous time slot is shifted to the second half of the next time slot, and signal in the next time slot is delayed for a time slot and transmitted;
(8) end the process during the IPDL.

In said step (3) and step (4), the transmitting power is doubled.

In addition, step (4) also includes: the transmitting of signal in the second half of the previous time slot and the first half of the next time slot is stopped.

Step (6) also includes: no signal is transmitted in the empty time slot.

Step (7) also includes: the transmitting of signal in the second half of the previous time slot and the first half of the next time slot is stopped.

The present invention halves the spread spectrum factor for the control channel and adjusts transmitting in the data channel or closes the signal transmitting of the whole time slot according to the channel (DPCH or HS-DSCH) and the position where IPDL occurs. Thus, the present invention implements requirements for IPDL, without interference to other users and data loss during IPDL. In this way, the present invention contributes to reduce the effect of IPDL to data traffic and system capacity, reduce delay in receiving data, and improve the utilization coefficient of channels.

### BRIEF DESCRIPTION OF THE DRAWINGS

Fig.1 is the flow chart of an embodiment of method according to the present invention.
Fig.2 shows the position where an IPDL occurs.
Fig.3 shows the position where an IPDL occupies a time slot of DPCH.
Fig.4 shows the position where an IPDL spans 2 time slots of DPCH;
Fig.5 shows the position where an IPDL occupies a time slot of HS-DSCH;
Fig.6 shows the position where an IPDL spans 2 time slots of HS-DSCH;

### DETAILED DESCRIPTION OF THE EMBODIMENT

The present invention is described in further detail according to the drawings and the embodiment.

A high-speed data traffic downlink carries data information and corresponding control information. Usually the control information is transmitted through Dedicated Physical Control Channel (DPCH), while the data information is transmitted through High Speed Downlink Shared Channel (HS-DSCH). The DPCH is allocated for each user to be occupied, but the HS-DSCH is shared by all users, and data of different users is identified through time division and code division in HS-DSCH. The users' control information in HS-DSCH is transmitted to the mobile station several TTIs ahead through the users' DPCH so as to know the modulation and encoding formats related to the data in HS-DSCH in advance, and when the data arrives, correct demodulation and decoding can be performed. Therefore, an IPDL can result in not only loss of data in the current HS-DSCH but also loss of control information in the current DPCH, as a result, it will affect correct demodulation and decoding for subsequent data.

On the basis of said analysis, if the IPDL occurs in DPCH, the spread spectrum factor of 2 time slots adjacent to the IPDL shall be halved; if an IPDL occurs in HS-DSCH, the signal transmitting for the time slot can be adjusted or closed on the whole according to the position of IPDL, the influence of IPDL can be reduced.

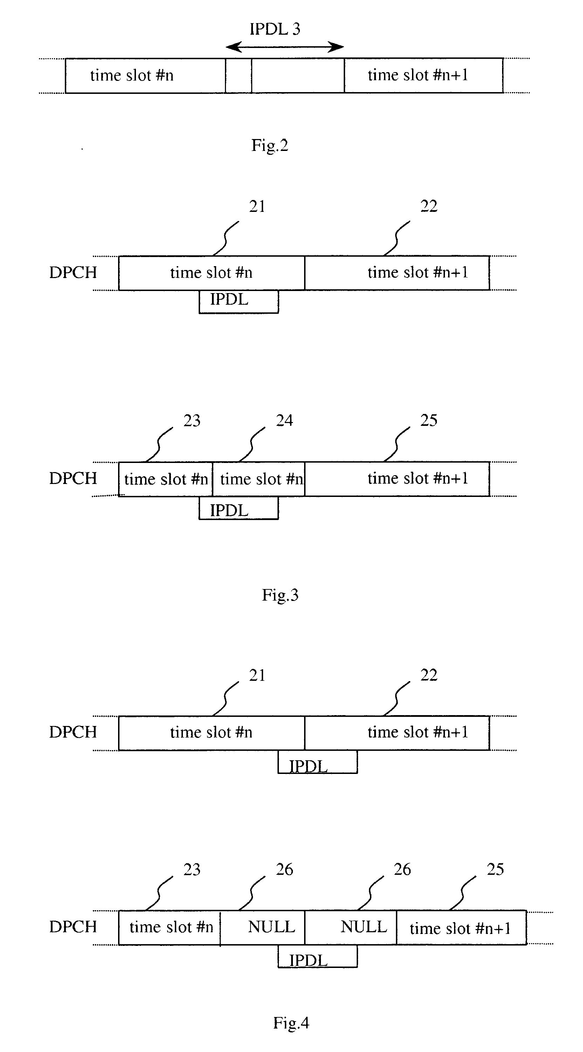

Because an IPDL occupies half a time slot and may occurs at any position, it may occupy only one time slot or span two time slots, referring to Fig.2, in the present invention, the transmission of high-speed data traffic is controlled according the two cases.

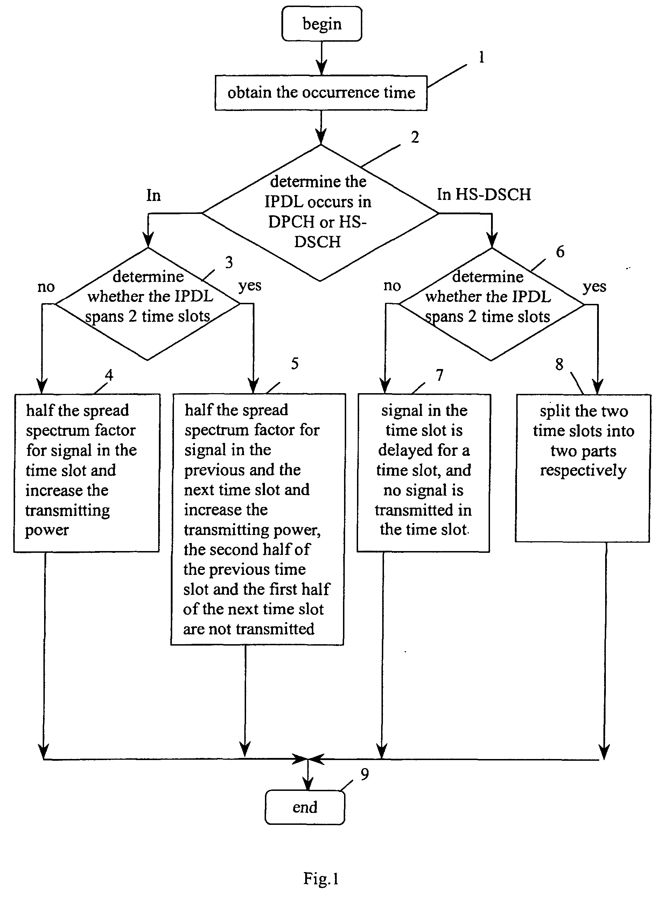

Fig.1 is the flow chart of the embodiment of method according to the present invention. According to Fig.1, first, the occurrence time of IPDL is obtained in step (1); and then determine the occurrence time of the IPDL in step (2), if the time happens in Dedicated Physical Control Channel (DPCH), turn to step (3) to process the IPDL. For the DPCH, because the spread spectrum factor is usually 256 or 512, in the case of enough code resource, the spread spectrum factor may be halved to enable the data in each original time slot to repeat in the first half and in the second half, referring to Fig.3. In Fig.3, component 21 and 22 are two integral time slots; when an IPDL occurs, the spread spectrum factor for time slot #n is halved, thus time slot #n is split into two partial components 23 and 24 with the same content, each of which occupies half a time slot. In this way, the whole component (slot 21) can be recovered only through merging component 23 and 24 at the receiving end. When the spread spectrum factor halved is transmitted, in order to ensure receiving quality, compared to component 21 and 22, transmitting of component 23 and 24 should be added transmitting power compensation.

For a DPCH that an IPDL spans two time slots, both of the time slots shall be processed with halved spread spectrum, referring to Fig.4. The component 21 (i.e., time slot #n) is changed to component 23 after it is processed with halved spread spectrum, and it is in the first half time slot; The component 22 (i.e., time slot #n+1) is changed to component 25 after it is processed with halved spread spectrum, and it is in the second half time slot. The second half time slot of component 23 and the first half time slot of component 25 is the position where the IPDL is, and they are marked as component 26 in Fig.4, when the component 26 is set NULL, signal stops transmitting. Thus, no signal will be transmitted for one time slot in DPCH, so interference to other users is reduced within this time, and the requirement for closing IPDL is satisfied. At the same time, information loss can be eliminated through halved spread spectrum factor. Similarly, the transmitting power for the halved spread spectrum factor also needs to be increased.

Therefore in step (3), whether the IPDL spans two time slots of DPCH is determined continuously. If not, turn to step (4). In step (4), the signal in the time slot occupied by the IPDL is processed with halved spread spectrum factor, and the transmitting power is increased, then the process in the current IPDL ends. If the IPDL is determined to span 2 channels, turn to step (5), the previous time slot spanned by the IPDL is processed with halved spread spectrum factor, the processed time slot is in the first half time slot, and the next time slot spanned by the IPDL is processed with halved spread spectrum factor, the processed time slot is in the second half time slot. And the transmitting power of signal in the first half of the previous time slot and the second half of the next time slot is increased, the signal in the second half of the previous time slot and the first half of the next time slot stop being transmitted, then the process for the current IPDL ends.

In step (4) and step (5), said the transmitting power is doubled.

In step (2), if the IPDL is determined to occur in a HS-DSCH, the process turns to step (6) to process the IPDL according to the characteristics of HS-DSCH.

For HS-DSCH, the spread spectrum factor is small (usually 16) due to heavy high-speed data traffic. If many code fragments are occupied, it is impossible to halve the spread spectrum factor and increase data transmitting power. Because the resource in HS-DSCH is allocated to different users through Time Division Multiplexing, data packets can be delayed for the time slot where the IPDL is in allocation of channel resource.

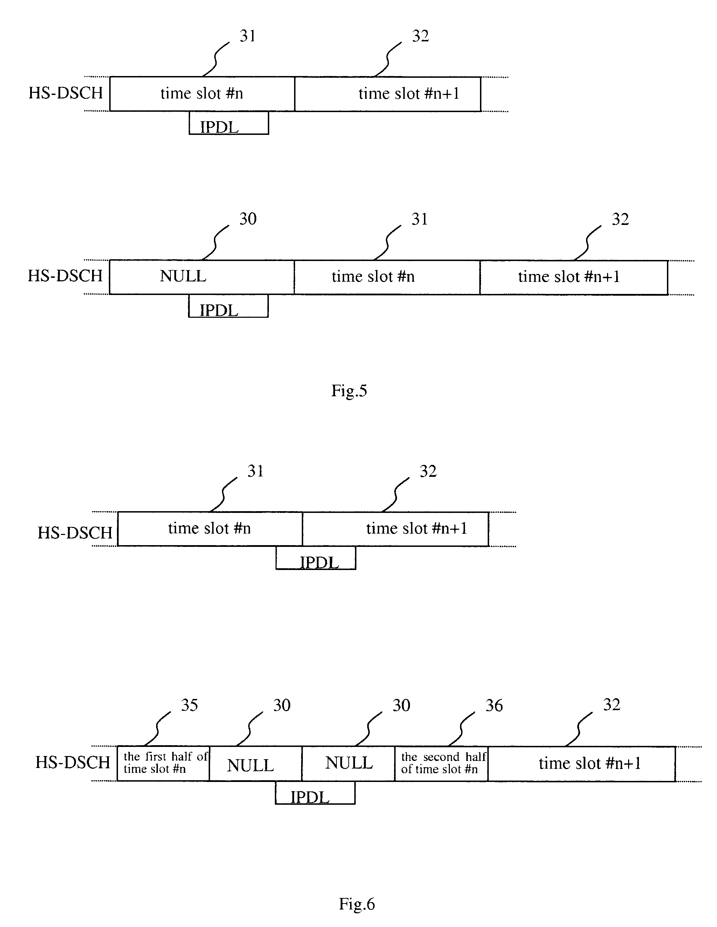

For the case that an IPDL occupies one time slot, referring to Fig.5, an integral empty time slot is inserted in the position where the IPDL is when the base station sends HS-DSCH. In the time slot, no signal is transmitted from the HS-DSCH, which can reduce the interference to other users. For the case that an IPDL spans two time slots, referring to Fig.6, the time slot #n is split into two parts, the first half is transmitted in the first half of original time slot #n, and the second half is transmitted in the second part of original time slot #n+1, and the time slot #n+1 is delayed for one time slot before being transmitted. The second half of original time slot #n and the first half of original time slot #n+1 are set NULL, which can reduce interference to other users in a time slot.

Therefore, in step (6), whether the IPDL spans two time slots of HS-DSCH is determined. If not, turn to step (7), an integral empty time slot is inserted in the position where the IPDL is. In the time slot, no signal will be transmitted, and then the process for the current IPDL ends. If the IPDL is determined to span two time slots of HS-DSCH, turn to step (8), and the two time slots (previous and next) spanned by the IPDL is split into two parts respectively. The signal in the first half of the previous time slot is transmitted normally. The signal in the second half of the previous time slot is shifted to the second half of the next time slot to transmit. And the signal in the next time slot is delayed for one time slot before being transmitted. The second half of the previous time slot and the first half of the next time slot stop transmitting, and finally the process for current IPDL ends.

## Claims

1. A method for controlling transmission of high-speed data traffic in IPDLs,**characterized in that** it comprises the following steps :
1 the network obtaining (1) the occurrence time of an idle period downlink abbreviated as IPDL, and determining (2) the occurrence time of an IPDL, if the time happens in Dedicated Physical Control Channel abbreviated as DPCH, turning to step 2, if the time happens in High Speed Downlink Shared Channel abbreviated as HS-DSCH, turning to step 5;
2 determining (3) whether the IPDL spans two time slots in DPCH, if not, turning to step 3, otherwise turning to step 4;
3 the spread spectrum factor being halved for signal in the time slot occupied by IPDL and the transmitting power being increased (4), then turning to step 8;
4 halving (5) the spread spectrum factor of the previous time slot spanned by IPDL, and the processed time slot being in the first half time slot, halving the spread spectrum factor of the next time slot spanned by IPDL, and the processed time slot being in the second half time slot, increasing the transmitting power for signal in the first half of the previous time slot and signal in the second half of the next time slot, and then turning to step 8;
5 determining (6) whether the IPDL spans two time slots of HS-DSCH, if not, turning to step 6, otherwise turning to step 7;
6 inserting (7) an integral empty time slot in the position where the IPDL is, and then turning to step 8;
7 splitting (8) the previous time slot and the next time slot spanned by IPDL into two halves of a time slot respectively, signal in the first half of the previous time slot being transmitted normally, while signal in the second half of the previous time slot being shifted to the second half of the next time slot, and signal in the next time slot being delayed for a time slot and transmitted;
8 ending (9) the process during the IPDL.

2. The method for controlling transmission of high-speed data traffic in IPDLs of claim 1, wherein in said step 3 and step 4, the transmitting power being doubled.

3. The method for controlling transmission of high-speed data traffic in IPDLs of claim 1, wherein step 4 also comprising: the transmitting of signal in the second half of the previous time slot and the first half of the next time slot being stopped.

4. The method for controlling transmission of high-speed data traffic in IPDLs of claim 1, wherein step 6 also comprising: no signal being transmitted in the empty time slot.

5. The method for controlling transmission of high-speed data traffic in IPDLs of claim 1, wherein step 7 also comprising: the transmitting of signal in the second half of the previous time slot and the first half of the next time slot being stopped.

## Patentansprüche

1. Verfahren zur Überwachung der Übertragung von Hochgeschwindigkeitsdatenverkehr in IPDLs, **dadurch gekennzeichnet, dass** es folgende Schritte aufweist:
1 das Netzwerk erhält (1) die Zeit des Auftretens einer Sendepause im Downlink (idle period downlink), abgekürzt IPDL, und bestimmt (2) die Zeit des Auftretens eines IPDL, wenn die Zeit im Dedicated Physical Control Channel (physikalischen Kanal, der einer Mobilstation exklusiv zugeteilt ist), abgekürzt DPCH, auftritt, Weitergehen zu Schritt 2, wenn die Zeit im High Speed Downlink Shared Channel, abgekürzt HS-DSCH, auftritt, Weitergehen zu Schritt 5;
2 Bestimmen (3), ob der IPDL im DPCH sich über zwei Zeitschlitze erstreckt, wenn nicht, Weitergehen zu Schritt 3, ansonsten, Weitergehen zu Schritt 4;
3 Halbieren des Spreizspektrumfaktors für das Signal in dem vom IPDL eingenommenen Zeitschlitz und Erhöhen (4) der Übertragungsleistung, dann Weitergehen zu Schritt 8;
4 Halbieren (5) des Spreizspektrumfaktors des vorangegangenen Zeitschlitzes, über den sich der IPDL erstreckt, wobei der bearbeitete Zeitschlitz in dem ersten halben Zeitschlitz ist, Halbieren des Spreizspektrumfaktors des nächsten Zeitschlitzes, über den sich der IPDL erstreckt, wobei der bearbeitete Zeitschlitz in dem zweiten halben Zeitschlitz ist, Erhöhen der Übertragungsleistung für das Signal in der ersten Hälfte des vorangegangenen Zeitschlitzes und das Signal in der zweiten Hälfte des nächsten Zeitschlitzes, dann Weitergehen zu Schritt 8;
5 Bestimmen (6), ob der IPDL sich über zwei Zeitschlitze des HS-DSCH erstreckt, wenn nicht, Weitergehen zu Schritt 6, ansonsten, Weitergehen zu Schritt 7;
6 Einfügen (7) eines integralen leeren Zeitschlitzes an der Stelle, an der der IPDL ist, und dann Weitergehen zu Schritt 8;
7 Teilen (8) des vorangegangenen Zeitschlitzes und des nächsten Zeitschlitzes, über die sich der IPDL erstreckt, in jeweils zwei Teile eines Zeitschlitzes, wobei das Signal in der ersten Hälfte des vorangegangenen Zeitschlitzes normal übertragen wird, während das Signal in der zweiten Hälfte des vorangegangenen Zeitschlitzes in die zweite Hälfte des nächsten Zeitschlitzes verschoben wird, und das Signal im nächsten Zeitschlitz für die Dauer eines Zeitschlitzes verzögert und dann übertragen wird;
8 Beenden (9) des Vorgangs während des IPDL.

2. Verfahren zur Überwachung der Übertragung von Hochgeschwindigkeitsdatenverkehr in IPDLs nach Anspruch 1, **dadurch gekennzeichnet, dass** in Schritt 3 und in Schritt 4 die Übertragungsleistung verdoppelt wird.

3. Verfahren zur Überwachung der Übertragung von Hochgeschwindigkeitsdatenverkehr in IPDLs nach Anspruch 1, **dadurch gekennzeichnet, dass** Schritt 4 auch das Übertragen des Signals in die zweite Hälfte des vorangegangenen Zeitschlitzes und das Stoppen der ersten Hälfte des nächsten Zeitschlitzes aufweist.

4. Verfahren zur Überwachung der Übertragung von Hochgeschwindigkeitsdatenverkehr in IPDLs nach Anspruch 1, **dadurch gekennzeichnet, dass** Schritt 6 auch die Maßnahme umfasst, die darin besteht, kein Signal im leeren Zeitschlitz zu übertragen.

5. Verfahren zur Überwachung der Übertragung von Hochgeschwindigkeitsdatenverkehr in IPDLs nach Anspruch 1, **dadurch gekennzeichnet, dass** Schritt 7 auch das Übertragen des Signals in die zweite Hälfte des vorangegangenen Zeitschlitzes und das Stoppen der ersten Hälfte des nächsten Zeitschlitzes aufweist.

## Revendications

1. Procédé pour contrôler la transmission de trafic de données à haute vitesse dans des IPDLs, **caractérisé en ce qu'**il comprend les étapes suivantes :
1 le réseau obtient (1) le temps d'occurrence d'un idle period downlink (lien descendant période d'inactivité), en abrégé IPDL, et détermine (2) le temps d'occurrence d'un IPDL, si ce temps a lieu dans le canal physique de contrôle dédié, en abrégé DPCH, on passe à l'étape 2, si ce temps a lieu dans le canal partagé DSCH à haute vitesse, en abrégé HS-DSCH, on passe à l'étape 5 ;
2 on détermine (3) si l'IPDL occupe deux tranches de temps dans le DPCH, si oui, on passe à l'étape 4, sinon, on passe à l'étape 3 ;
3 on divise par deux (4) le facteur d'étalement du spectre pour un signal dans la tranche de temps occupée par IPDL et on augmente la puissance de transmission, puis on passe à l'étape 8 ;
4 on divise par deux (5) le facteur d'étalement du spectre de la tranche de temps précédente occupée par l'IPDL, la tranche de temps traitée étant dans la première demi-tranche de temps, on divise par deux le facteur d'étalement du spectre de la tranche de temps suivante occupée par l'IPDL, la tranche de temps traitée étant dans la deuxième demi-tranche de temps, on augmente la puissance de transmission pour le signal dans la première moitié de la tranche de temps précédente et pour le signal dans la deuxième moitié de la tranche de temps suivante, puis on passe à l'étape 8 ;
5 on détermine (6) si l'IPDL occupe deux tranches de temps du HS-DSCH, si oui, on passe à l'étape 7, sinon on passe à l'étape 6 ;
6 on insère (7) à l'endroit où se trouve l'IPDL une tranche de temps intégrale vide et on passe ensuite à l'étape 8 ;
7 on divise (8) la tranche de temps précédente et la tranche de temps suivante occupée par l'IPDL en deux moitiés d'une tranche de temps respective, le signal dans la première moitié de la tranche de temps précédente étant transmis normalement tandis que le signal dans la deuxième moitié de la tranche de temps précédente est déplacé dans la deuxième moitié de la tranche de temps suivante et le signal dans la tranche de temps suivante est différé d'une tranche de temps avant d'être transmis ;
8 on termine (9) le processus pendant l'IPDL.

2. Procédé pour contrôler la transmission de trafic de données à haute vitesse dans des IPDLs selon la revendication 1, **caractérisé en ce que** dans l'étape 3 et dans l'étape 4 on double la puissance de transmission.

3. Procédé pour contrôler la transmission de trafic de données à haute vitesse dans des IPDLs selon la revendication 1, **caractérisé en ce que** l'étape 4 comprend aussi le fait de transmettre le signal dans la deuxième moitié de la tranche de temps précédente et d'arrêter la première moitié de la tranche de temps suivante.

4. Procédé pour contrôler la transmission de trafic de données à haute vitesse dans des IPDLs selon la revendication 1, **caractérisé en ce que** l'étape 6 comprend aussi le fait de ne pas transmettre de signaux dans la tranche de temps vide.

5. Procédé pour contrôler la transmission de trafic de données à haute vitesse dans des IPDLs selon la revendication 1, **caractérisé en ce que** l'étape 7 comprend aussi le fait de transmettre le signal dans la deuxième moitié de la tranche de temps précédente et d'arrêter la première moitié de la tranche de temps suivante.
